# EUROPEAN PATENT SPECIFICATION

(11) **EP 3 906 822 B1**
(45) Date of publication and mention of the grant of the patent: **03.07.2024**
(21) Application number: 21171908.3
(22) Date of filing: 03.05.2021
(51) Int. Cl.: A47J 43/07

(54) **MIXER ASSEMBLY**
MIXERANORDNUNG
ENSEMBLE MÉLANGEUR

(30) Priority: 05.05.2020 US 202016867233
(43) Date of publication of application: 10.11.2021
(60) Divisional application: 24164861.7
(73) Proprietor: Whirlpool Corporation, Benton Harbor, MI 49022 (US)
(72) Inventor: Ebstein, Ryan Nelson, 21024 Cassinetta di Biandronno (VA) (IT)
(74) Representative: PGA S.p.A., Milano, Succursale di Lugano

(56) References cited:
- EP-A1- 3 090 669
- GB-A- 2 459 309
- US-A- 5 782 558
- US-A1- 2019 313 855

## Description

### BACKGROUND OF THE INVENTION

The present invention generally relates to an appliance, and more specifically, to a mixer assembly for an appliance.
Document EP 3 090 669 A1 discloses a pouring shield for a stand mixer which includes a mixer head and is configured to receive a mixing bowl with an open top.

### SUMMARY OF THE DISCLOSURE

According to one aspect of the present invention, a mixer assembly according to claim 1 is disclosed. Further preferred embodiments are disclosed in the dependent claims.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a side elevational view of a mixer assembly of the present disclosure in a raised position;
FIG. 2 is a side elevational view of a mixing bowl of the present disclosure that has a ridge extending outwardly from a lower portion of the mixing bowl;
FIG. 3 is a top perspective view of a shield for a mixing assembly of the present disclosure;
FIG. 4 is a bottom perspective view of the shield of FIG. 3;
FIG. 5 is a side elevational cross-sectional view of the shield of FIG. 3 with a mixer head of the present disclosure in phantom;
FIG. 6 is a side elevational view of a mixer assembly of the present disclosure with a mixing tool;
FIG. 7 is a top perspective view of the mixing tool of FIG. 6 that has a first arm and a second arm;
FIG. 8 is a side elevational view of the mixing tool of FIG. 6 illustrating the first arm at the first angle;
FIG. 9 is a top perspective exploded view of a heated base of the present disclosure;
FIG. 10 is a top perspective view of a heated base of the present disclosure;
FIG. 11 is a cross-sectional view of the heated base of FIG. 10 taken along lines Xl-XI illustrating a heating feature that includes induction coils;
FIG. 12 is a cross-sectional view of the heated base of FIG. 10 taken along lines XII-XII illustrating a heater and a thermal capacitor;
FIG. 13 is an enlarged cross-sectional view of a portion of the heated base of FIG. 12 taken along line XIII-XIII illustrating an engagement clip in a locked position; and
FIG. 14 is an enlarged cross-sectional view of the heated base of FIG. 12 taken along line XIV-XIV illustrating an engagement clip in an unlocked position.

The components in the figures are not necessarily to scale, emphasis instead being placed upon illustrating the principles described herein.

### DETAILED DESCRIPTION

The present illustrated embodiments reside primarily in combinations of apparatus components related to a mixer assembly. Accordingly, the apparatus components have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

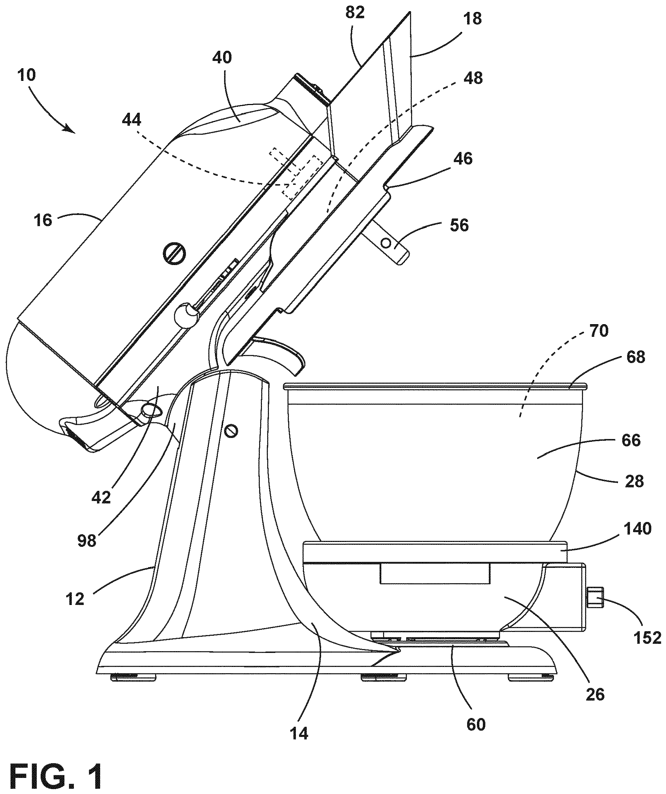

For purposes of description herein, the terms "upper," "lower," "right," "left," "rear," "front," "vertical," "horizontal," and derivatives thereof shall relate to the disclosure as oriented in FIG. 1. Unless stated otherwise, the term "front" shall refer to the surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "comprises a . . . " does not, without more constraints, preclude the existence of additional identical elements in the process, method, article, or apparatus that comprises the element.

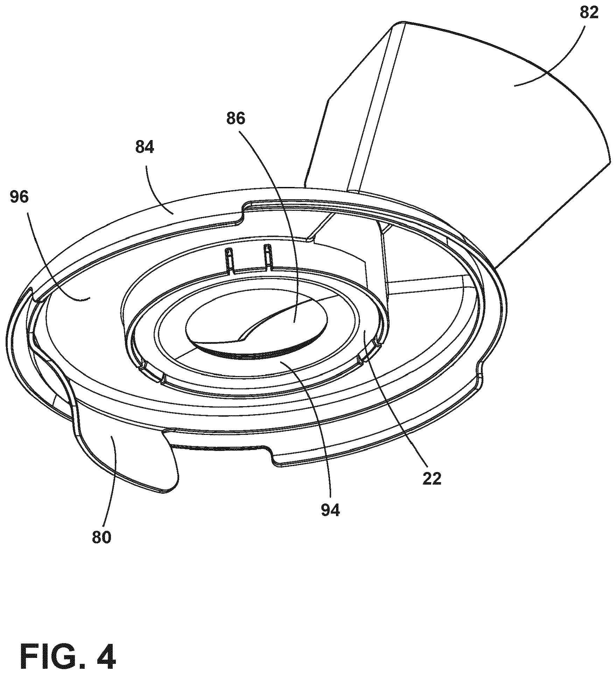

Referring to the configuration set forth in FIGS. 1-14, reference numeral 10 generally designates a mixer assembly that includes a body 12 having a pedestal 14 and a mixer head 16. A shield 18 is operably coupled to the mixer head 16. The shield 18 includes a stationary attachment portion 20, a rotational inner ring 22 that is operably coupled to the stationary attachment portion 20, and a gasket 24. The gasket 24 is coupled to the rotational inner ring 22, such that the rotational inner ring 22 is disposed between the gasket 24 and the stationary attachment portion 20. A heated base 26 is operably coupled to the pedestal 14 and is configured to receive a mixing bowl 28. In addition, a locking member 30 is coupled to the heated base 26 and is operable between a locked position 32 and an unlocked position 34. It is generally contemplated that the locked position 32 may be referred to as a first position and the unlocked position 34 may be referred to as a second position.

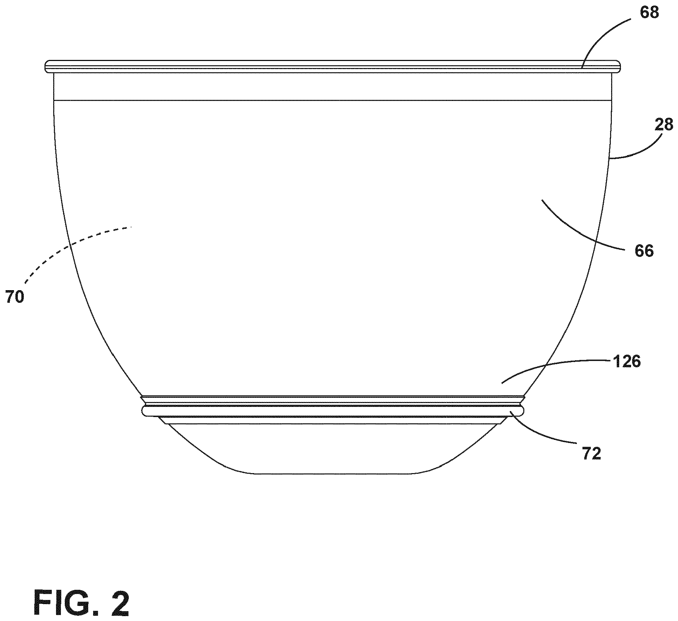

Referring now to FIGS. 1-3, the mixer assembly 10 is illustrated as a stand mixer with the mixer head 16 having an attachment end 40 and a pivot end 42. It is generally contemplated that a drive system 44 is disposed within the mixer head 16 and is configured to engage and operate an attachment feature 46 of the mixer head 16. The attachment feature 46 is coupled to the gasket 24 of the shield 18 to define a seal 48 to minimize potential fluid contact with the drive system 44, as described in greater detail below with regard to FIGS. 2-5. In addition, the attachment feature 46 of the mixer head 16 is operably coupled to the rotational inner ring 22 of the shield 18. The drive system 44 generally operate the attachment feature 46 in a rotational, planetary movement, as well as adjusting the height and position of the attachment feature 46, as will be discussed below. The rotational, planetary movement of the attachment feature 46 is translated to the rotational inner ring 22 to which the attachment feature 46 is coupled, such that there is a simultaneous rotation of the rotational inner ring 22, the attachment feature 46, and the gasket 24 by the drive system 44.

The attachment feature 46 of the mixer head 16 is configured to be adjusted in a generally upward and downward direction by the drive system 44. The drive system 44 also rotate the attachment feature 46, the speed of which is controlled by a speed adjuster 52, described below, disposed on a side of the mixer head 16. The attachment feature 46 includes a rotatable disk 54 and a post 56 that extends from the rotatable disk 54, such that a mixing tool 58, described below, can attach to the attachment feature 46. It is generally contemplated that the mixing tool 58 may attach to the post 56 or may attach proximate to the post 56 to the rotatable disk 54 directly. As mentioned above, the mixer head 16 also includes the speed adjuster 52 disposed along a side of the mixer head 16. However, it is contemplated that the speed adjuster 52 may be positioned in any practical location along the mixer head 16. The speed adjuster 52 generally varies and adjusts the speed of the mixing tool 58, which is coupled to the attachment feature 46 and discussed in further detail below.

With further reference to FIG. 1, the mixer head 16 is pivotably coupled to the pedestal 14 at the pivot end 42 of the mixer head 16. The pedestal 14 includes an engagement portion 60 to which the heated base 26 is operably coupled. The engagement portion 60 may include a threaded engagement, such that the heated base 26 may be threadably engaged and disposed within the engagement portion 60 of the pedestal 14 to couple the heated base 26 to the body 12 of the mixer assembly 10. By way of example, not limitation, the heated base 26 may be twisted or rotated onto the engagement portion 60 until a user receives tactile feedback that the heated base 26 is securely attached to the pedestal 14. Additionally or alternatively, the engagement portion 60 and the heated base 26 may be operably coupled by any practical coupling method known in the art, such as via magnetic attachment.

As illustrated in FIGS. 1 and 2, the mixing bowl 28 is disposed within and operably coupled to the heated base 26, described in further detail below. The mixing bowl 28 includes a shell 66 that extends to an upper lip 68 to define an inner cavity 70. In addition, a ridge 72 extends outwardly and circumferentially from and around the shell 66 of the mixing bowl 28. Additionally or alternatively, the ridge 72 may be disposed at intervals along the shell 66, such that multiple ridges may outwardly extend from the mixing bowl 28. As will be described in more detail below, the ridge 72 is configured to operably and selectively couple the mixing bowl 28 to the heated base 26. As illustrated in FIG. 1, the shield 18 is configured to selectively couple to the upper lip 68 of the mixing bowl 28 to generally cover the inner cavity 70 of the mixing bowl 28. Thus, as ingredients are mixed within the inner cavity 70, it is generally contemplated that the shield 18 minimizes potential splatter or other fluid, such as steam, from exiting the mixing bowl 28.

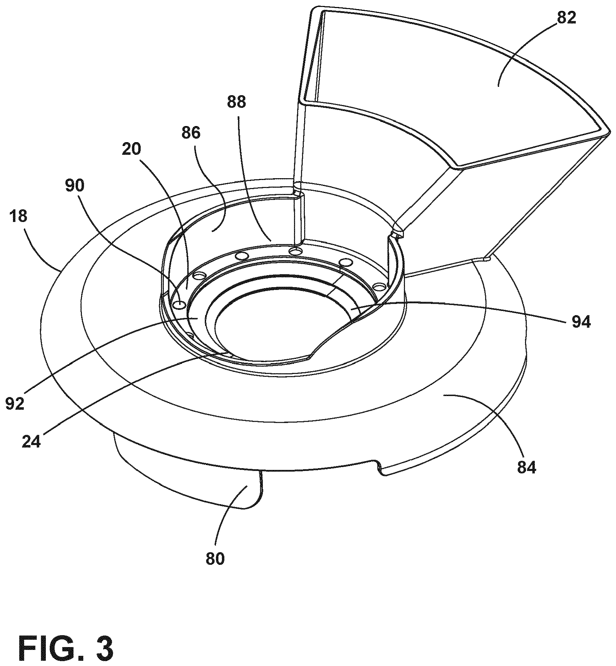

Referring now to FIGS. 3-5, the shield 18 includes the stationary attachment portion 20, the rotational inner ring 22, and the gasket 24, as mentioned above. The shield 18 also includes a drip guard 80 and an ingredient inlet 82 upwardly extending from the shield 18. As illustrated in FIG. 3, the ingredient inlet 82 has a generally funnel shape to direct the ingredients into the mixing bowl 28. In addition, the wide opening of the ingredient inlet 82 allows for a dissipation of steam that may occur as a result of the heated contents within the mixing bowl 28. The wide opening minimizes the concentration of the steam that may exit the ingredient inlet 82. The drip guard 80, described below, generally extends between the pivot end 42 of the mixer head 16 and the pedestal 14. The drip guard 80 is disposed within the mixing bowl 28 (FIG. 1) when the shield 18 is coupled to the mixing bowl 28 (FIG. 1), and as best illustrated in FIG. 1, the drip guard 80 extends toward the mixing bowl 28 proximate to the body 12 of the mixer assembly 10, as described further below.

As illustrated in FIG. 3, the shield 18 includes a collar 84 and a flange 86 upwardly extending from the collar 84 to define a receiving opening 88 of the shield 18 in which the attachment end 40 of the mixer head 16 is disposed. The stationary attachment portion 20 of the shield 18 is positioned within the receiving opening 88 and magnetic fasteners 90 are disposed along a circumference of the stationary attachment portion 20, such that the magnetic fasteners 90 are configured to couple to the attachment end 40 of the mixer head 16 as the mixer head 16 is typically formed from a metal material.

The gasket 24 is adjacent to the stationary attachment portion 20 and includes an upper gasket portion 92 and a lower gasket portion 94. The upper gasket portion 92 and the lower gasket portion 94 define a stepped arrangement, best illustrated in FIG. 3, of the gasket 24, such that the upper gasket portion 92 is proximate to the stationary attachment portion 20 and the lower gasket portion 94 is adjacent to the rotational inner ring 22. It is generally contemplated that the rotational inner ring 22 is disposed between the gasket 24 and the stationary attachment portion 20, such that the gasket 24 is interior to the rotational inner ring 22 of the shield 18.

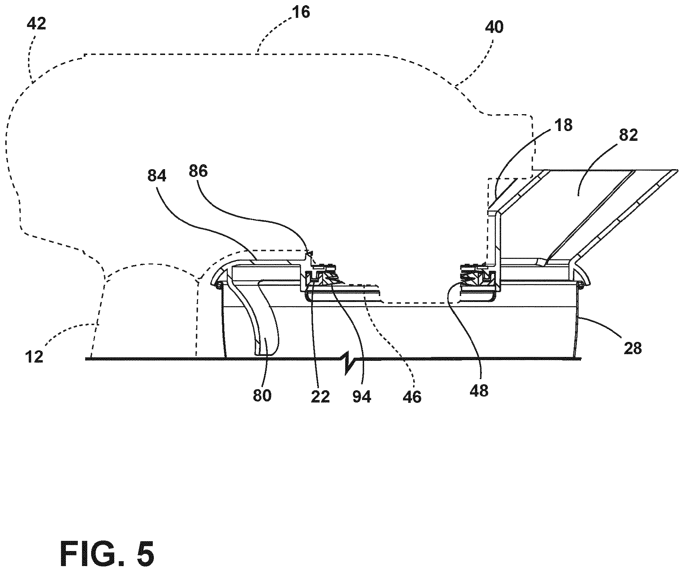

With further reference to FIG. 5 and as mentioned above, the gasket 24 defines the seal 48 between the attachment feature 46 of the attachment end 40 of the mixer head 16 and the shield 18. The seal 48 minimizes the potential for fluid, such as steam, to come into contact with the drive system 44 (FIG. 1) of the mixer head 16. Adjacent to the seal 48, the rotational inner ring 22 is rotatably coupled to the attachment feature 46 of the mixer head 16 via the gasket 24 to maintain the seal 48 defined between the gasket 24 and the attachment feature 46 of the mixer head 16. To minimize fluid contact, as mentioned above, the gasket 24 rotates in conjunction with the attachment feature 46 and the rotational inner ring 22 to minimize potential faltering of the seal 48. The rotational inner ring 22 along with the attachment feature 46 are configured to rotate in a planetary fashion, such that the mixing tool 58 may rotate within the mixing bowl 28. Potential steam that may be present within the mixing bowl 28 as a result of heated contents can generally be contained by the shield 18. Specifically, the addition of the rotational inner ring 22 and the gasket 24 separate, via the seal 48, the attachment end 40 of the mixer head 16 from the heated contents and potential steam that may result.

Referring still to FIGS. 3-5, condensation may generally form along an interior surface 96 of the shield 18, such that when the pivot end 42 of the mixer head 16 is pivoted relative to the body 12, the drip guard 80 of the shield 18 minimizes potential contact of condensation accumulated on the interior surface 96 with a hinge 98, which couples the pivot end 42 of the mixer head 16 to the pedestal 14. The drip guard 80 is generally arcuate in shape, such that the drip guard 80 generally follows the curvilinear structure between the mixer head 16 and the pedestal 14 and generally acts as an extension of the shell 66 of the mixing bowl 28. As mentioned above, the shield 18 is generally disposed along the upper lip 68 of the mixing bowl 28, which is positioned within the heated base 26, discussed in further detail below. The position of the shield 18 proximate to the upper lip 68 of the mixing bowl 28 minimizes steam contact with the hinge 98 despite the position of the mixer head 16. For example, the mixer head 16 may be pivoted in order to access the mixing tool 58 and/or the heated contents within the mixing bowl 28, as illustrated in FIG. 1. In such configuration, the drip guard 80 is disposed to direct the potential condensation along the interior surface 96 of the shield toward the mixing bowl 28 rather than the hinge 98.

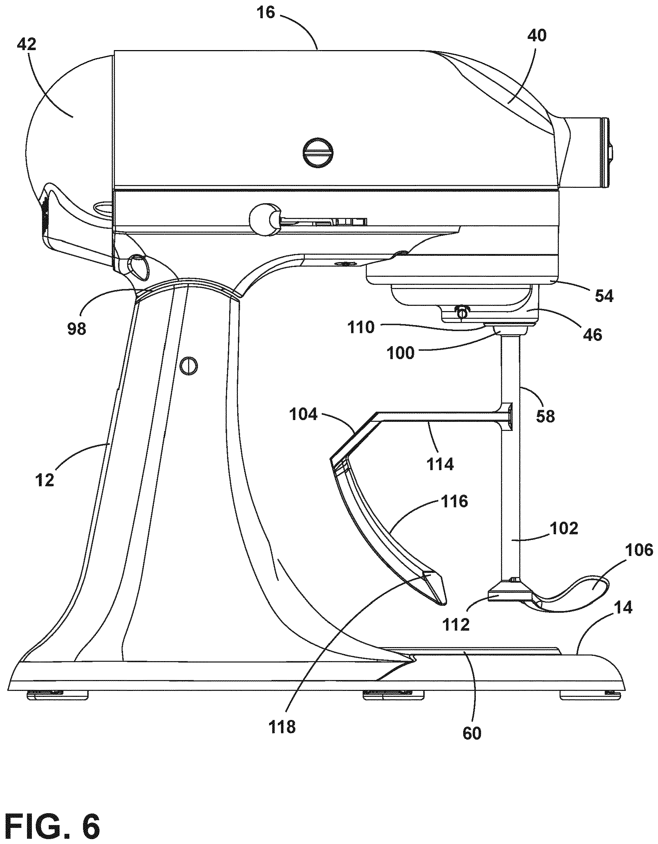

Referring now to FIGS. 6-8, the mixing tool 58 is coupled to the attachment feature 46 of the mixer head 16. The mixing tool 58 includes a retention end 100, a shaft 102, a first arm 104, and a second arm 106. The mixing tool 58 is operably coupled to the attachment feature 46 via the retention end 100, such that the retention end 100 may include a friction fit, mechanical fasteners, or other coupling structures known in the art. By way of example, not limitation, the retention end 100 can be configured to operably couple to the post 56 to define a counter-shaft motion when the rotatable disk 54 is in operation, described in more detail below. The retention end 100 includes a recessed portion 108 and a flange 110 outwardly extending from the recessed portion 108 of the retention end 100. By way of example, not limitation, the post 56 (FIG. 1) of the attachment feature 46 can be received within the recessed portion 108 of the retention end 100 of the mixing tool 58.

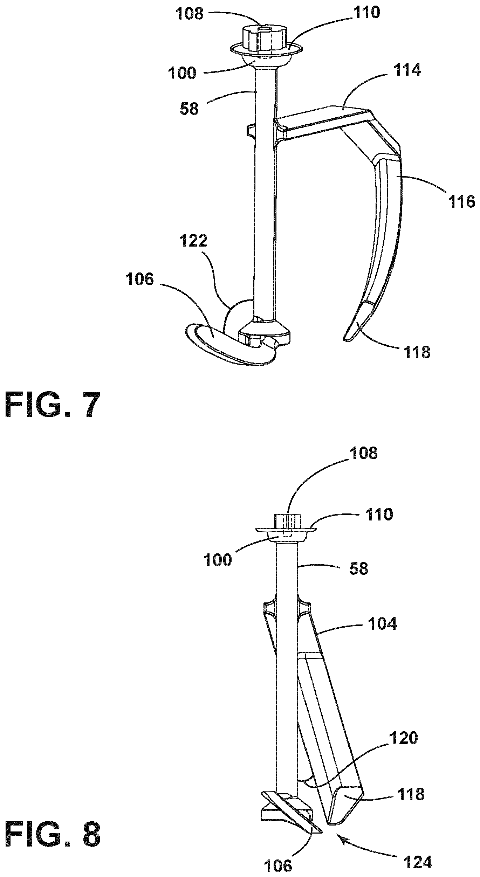

With reference now to FIGS. 7 and 8, the shaft 102 extends from the retention end 100 and includes a terminal end 112. The first arm 104 of the mixing tool 58 outwardly extends from the shaft 102, and the second arm 106 of the mixing tool 58 outwardly extends from the terminal end 112 of the shaft 102. The first arm 104 includes a crossbar 114 and a flipping portion 116 that has a tip 118, which leads the crossbar 114 relative to the shaft 102. Stated differently, the first arm 104 extends outward and downward at a first angle 120 relative to the shaft 102. Comparatively, the second arm 106 extends outward and upward from the shaft 102 at an opposing second angle 122 relative to the first angle 120 of the first arm 104. The first angle 120 and the opposing second angle 122 define a mixing arrangement 124 that maintains the ingredients within a lower portion 126 (FIG. 2) of the mixing bowl 28 (FIG. 2). The first and second angles 120, 122 also promote folding and flipping of the ingredients within the mixing bowl 28 to define a generally uniform mixing pattern of the mixing arrangement 124.

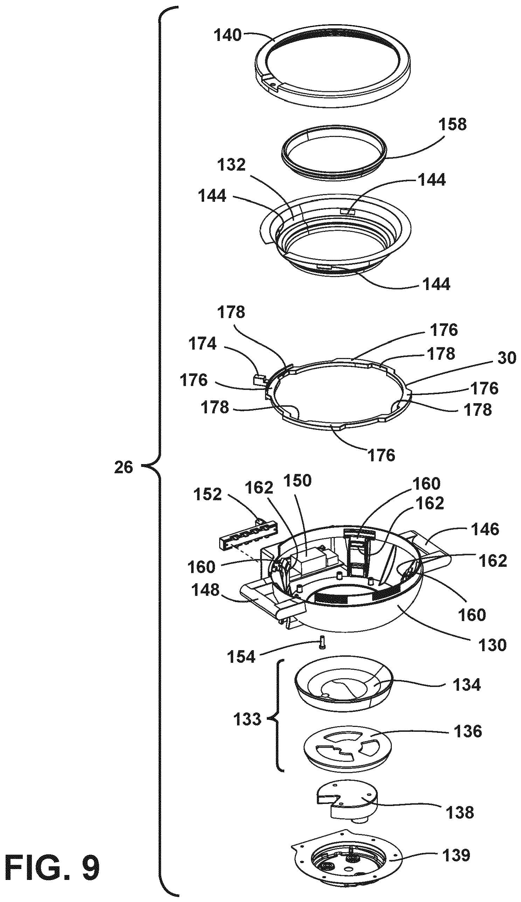

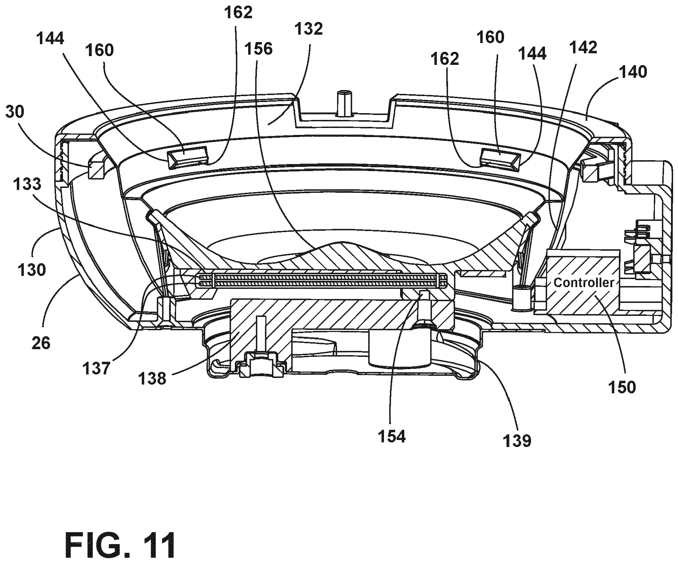

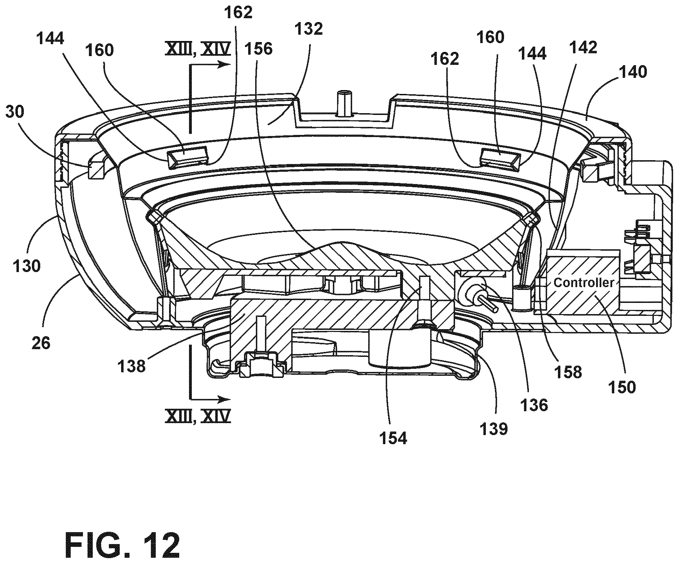

Referring now to FIGS. 9-14, the heated base 26 includes an outer housing 130 and an inner housing 132. A heating feature 133 is disposed between the outer housing 130 and the inner housing 132. As illustrated in FIG. 12, the heating feature 133 includes a thermal capacitor 134 and a heater 136. The heater 136 is disposed within the outer housing 130, and the thermal capacitor 134 is coupled to the inner housing 132, as described in more detail below. Additionally or alternatively, the heating feature 133 may include induction coils 137 (FIG. 11), which are disposed within the outer housing 130 and described below.

As illustrated in FIG. 12, the outer housing 130 includes an insulated platform 138 disposed within a coupling feature 139, an upper rim 140, and a lower bowl 142. By way of example, not limitation, the coupling feature 139 can have a threaded configuration to couple the heated base 26 to the engagement portion 60 (FIG. 6) of the pedestal 14 (FIG. 6). The thermal capacitor 134 is positioned within the lower bowl 142 of the outer housing 130, such that the thermal capacitor 134 is operably coupled with the outer housing 130. As discussed below, the inner housing 132 defines apertures 144 and is coupled to the outer housing 130 to insulate the outer housing 130 from the heater 136 and the thermal capacitor 134.

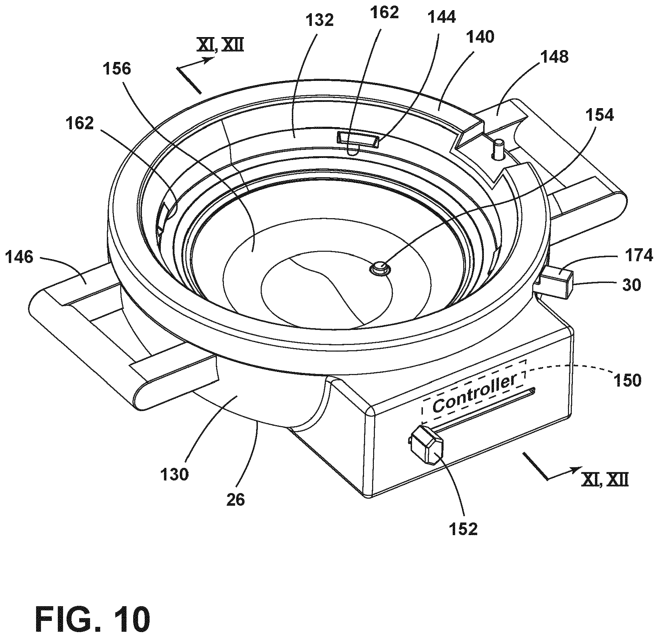

With reference to FIG. 10, the outer housing 130 includes first and second handles 146, 148 that outwardly extend from the upper rim 140 of the outer housing 130. The first and second handles 146, 148 and the outer housing 130 are generally insulated from the heating feature 133, such that despite the operation of the heating feature 133, a user can manipulate the heated base 26 relative to the pedestal 14 (FIG. 6) via the first and second handles 146, 148. As illustrated in FIG. 11, the lower bowl 142 of the outer housing 130 encases the inner housing 132 and the heating feature 133, as described in further detail below. The outer housing 130 also encases a controller 150 that is operably coupled to a temperature control 152 of the heated base 26. The temperature control 152 is illustrated as a sliding knob, which gradually increases and decreases the temperature of the heating feature 133 within the heated base 26. The controller 150 is disposed within the outer housing 130 and is communicatively coupled to a sensor 154.

The sensor 154 extends through a receiving surface 156, which may be defined by the thermal capacitor 134, as depicted in FIG. 12, to detect the temperature of the mixing bowl 28 when the mixing bowl 28 is disposed on the receiving surface 156. The controller 150 adjusts the heating feature 133 to a temperature set by the temperature control 152 when the sensor 154 detects that the mixing bowl 28 has reached the set temperature. It is generally contemplated that the heating feature 133 can include the thermal capacitor 134 to generally regulate the heat from the heater 136, such that the heat is evenly and uniformly displaced across the receiving surface 156 of the thermal capacitor 134. Thus, the heater 136 outputs heat of the heating feature 133 in order to reach the temperature selected by the temperature control 152, and the thermal capacitor 134 regulates the temperature across the receiving surface 156.

Alternatively, as illustrated in FIG. 11, it is also contemplated that the heating feature 133 can include the induction coils 137, such that as the temperature is adjusted the induction coils 137 are activated to induce an electric current within the heated base 26 to generate the heat. In such a configuration, the heated base 26 can be considered to be an induction base, such that the induction coils 137 define a substantially even distribution of heat within the heated base 26 as a result of induction.

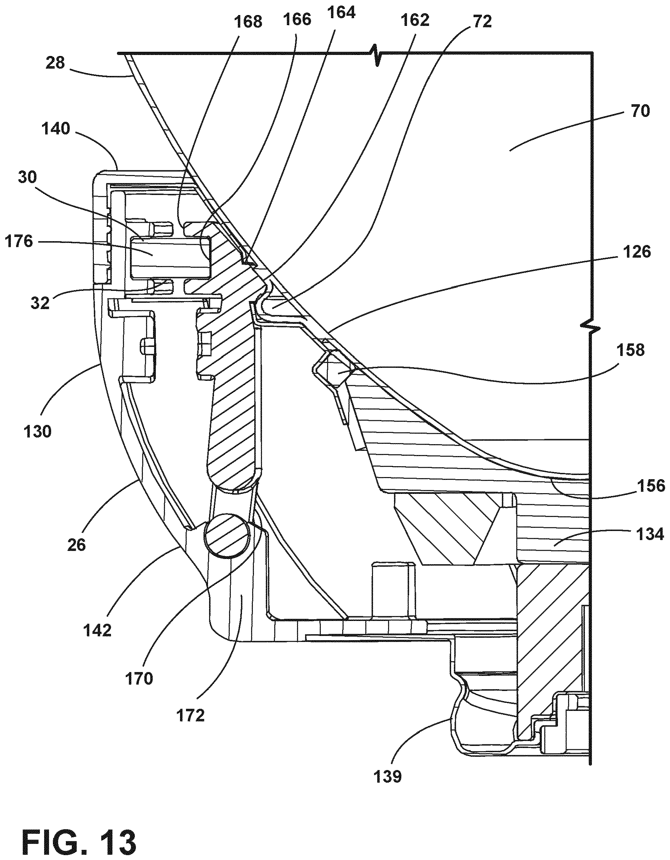

With further reference to FIGS. 9-12, and as mentioned above, the insulated platform 138 of the outer housing 130 insulates the pedestal 14 (FIG. 1) from the heated base 26 and couples the heated base 26 to the pedestal 14 (FIG. 1). In addition, the inner housing 132 provides insulation for the outer housing 130, such that the inner housing 132 forms a barrier between the outer housing 130 and the heated mixing bowl 28 (FIG. 13) disposed on the receiving surface 156 of the thermal capacitor 134. It is generally contemplated that the inner housing 132 itself may be formed from a metal material, such as steel, or other conductive materials known in the art, such that the inner housing 132 may increase in temperature relative to the heated mixing bowl 28 (FIG. 13), while maintaining a barrier between the mixing bowl 28 (FIG. 13) and the outer housing 130. To further define the barrier, the inner housing 132 is coupled to the thermal capacitor 134 via a seal gasket 158, which is disposed around and between the inner housing 132 and the thermal capacitor 134.

With reference to FIGS. 9, 12, and 13, the inner housing 132 also defines the apertures 144, as mentioned above, through which engagement clips 160 of the heated base 26 extend. Although illustrated as multiple engagement clips 160, it is contemplated that a single engagement clip 160 may extend through one of the apertures 144 defined by the inner housing 132. The engagement clips 160 are operably coupled to the outer housing 130 and extend through the apertures 144 of the inner housing 132 to selectively couple the mixing bowl 28 to the heated base 26. Stated differently, a projection 162 of each engagement clip 160 extends through a respective aperture 144 to engage the ridge 72 along the lower portion 126 of the mixing bowl 28. The locking member 30 engages the engagement clip 160 to secure the projection 162 within the respective aperture 144 to prevent the mixing bowl 28 from being removed from the heated base 26 in the first position 32, described further below.

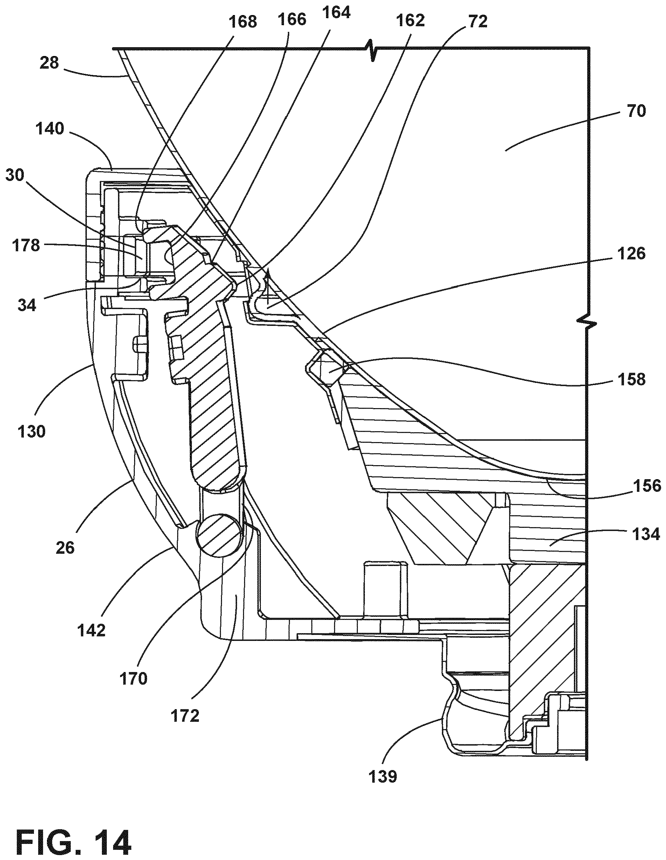

Referring to FIGS. 12-14, the projections 162 define a first side 164 of the engagement clips 160, and a channel 166 is defined on an opposing second side 168 of each engagement clip 160. The projections 162 are generally angular, such that the projections 162 fit between the shell 66 and the ridge 72 of the mixing bowl 28. However, it is contemplated that the projections 162 may have any practical shape to couple the engagement clips 160 to the ridge 72 of the mixing bowl 28. The engagement clips 160 also include a retention feature 170 that is disposed within a receiving member 172 of the outer housing 130, as best illustrated in FIGS. 13 and 14. The retention feature 170 biases the engagement clip 160 within the receiving member 172 relative to the outer housing 130 to selectively couple the engagement clips 160 to the ridge 72 of the mixing bowl 28. The engagement clips 160 are operable between an extended position (FIG. 13) and a retracted position (FIG. 14), such that in the first position 32, the locking member 30 retains the engagement clips 160 in the extended positon (FIG. 13) to securely retain the mixing bowl 28 within the heated base 26. In the second position 34, the mixing bowl 28 may be removed from the heated base 26, such that the locking member 30 receives the engagement clips 160 during removal of the mixing bowl 28. Additionally or alternatively, the engagement clips 160 may be biased by the locking member 30, which is positioned between the inner housing 132 and the outer housing 130 proximate to the upper rim 140 of the outer housing 130.

The locking member 30 may be integrally formed with the heated base 26. Alternatively, the locking member 30 may be separately formed and operably coupled to the heated base 26. As best illustrated in FIG. 9, the locking member 30 has an actuator 174 and defines engagement surfaces 176 and recessed surfaces 178 along a circumference of the locking member 30. With reference to FIGS. 12-14 and as mentioned above, the locking member 30 is operably coupled to the engagement clips 160. Specifically, the locking member 30 is disposed within the channels 166 defined by the engagement clips 160 to engage the engagement clips 160 in the first position 32 (FIG. 13) and receive the engagement clips 160 in the second position 34 (FIG. 14).

As mentioned above, it is generally contemplated that the first position 32 can correspond to the locked position and the second position 34 can correspond to the unlocked position of the engagement clips 160. The locked position 32 is defined by the engagement surfaces 176 being disposed within the channels 166 of the engagement clips 160 to maintain the engagement of the engagement clips 160 with the ridge 72 of the mixing bowl 28.

The locking member 30 retains the engagement clips 160 in the biased, locked position 32 to prevent removal of the mixing bowl 28. Comparatively, in the unlocked position 34, the recessed surfaces 178 of the locking member 30 are generally disposed within the channels 166 of the engagement clips 160, such that as the mixing bowl 28 is removed the engagement clips 160 bias into the recessed surfaces 178 to remove the projections 162 from the ridge 72 of the mixing bowl 28. The transition of the locking member 30 is achieved by lateral movement of the actuator 174 relative to the heated base 26, such that the actuator 174 translates the engagement surfaces 176 through the channel 166 of each engagement clip 160 to position the recessed surfaces 178 in the channels 166. Thus, the actuator 174 translates the engagement clips 160, via the locking member 30, through the locked position 32 and the unlocked position 34.

Referring again to FIGS. 1-14, the heated base 26 allows a user to cook while mixing and maintaining the set temperature within the mixing bowl 28. In addition, the combination of the locking member 30 and the ridge 72 defined along the mixing bowl 28 to retain the mixing bowl 28 within the heated base 26 minimizes the potential for tipping or spilling of the heated contents out of the mixing bowl 28. The shield 18 further provides a barrier between the user and the heated contents within the mixing bowl 28 to minimize potential contact with the heated contents.

Additionally, the seal 48 defined between the shield 18 and the attachment end 40 of the mixer head 16 protects the drive system 44 from coming into contact with steam and/or prevents the build-up of condensation near the drive system 44. Thus, the shield 18 is further configured to prevent rusting or other consequential effects of liquid contacting the drive system 44. This is specifically achieved by the seal 48 and the simultaneous rotation of the rotatable disk 54 and the rotational inner ring 22 of the shield 18. The rotational inner ring 22 provides the protective functionality of the shield 18 while allowing the rotatable disk 54 of the mixer head 16 to perform usual mixing functions. Furthermore, the drip guard 80 provides a similar protective functionality as the drip guard 80 is disposed between the mixing bowl 28 and the hinge 98 of the body 12. The drip guard 80 minimizes the potential for condensation build-up to occur in or around the hinge 98 and minimizing potential dripping from the interior surface 96 of the shield 18 from contacting the hinge 98 as it generally covers the hinge 98. Rather, condensation that may build-up on the interior surface 96 of the shield 18 drips down the drip guard 80 and away from the hinge 98.

To further minimize potential exposure to the heated contents, the mixing tool 58 is operably coupled to the rotatable disk 54 proximate to the post 56, mentioned above. The mixing tool 58 is designed to maintain the heated contents within the lower portion 126 of the mixing bowl 28 to minimize potential splatter or other forms of external contact with the heated contents. The first angle 120 and the opposing second angle 122 of the first and second arms 104, 106, respectively, are specifically designed to counteract one another to maintain the heated contents in the lower portion 126 of the mixing bowl 28.

Ultimately, the combination of the heated base 26 to heat and maintain the temperature of the heated contents, the locking member 30 to retain the mixing bowl 28 within the heated base 26, the shield 18 to protect the mixer head 16 and the hinge 98 from steam and condensation exposure, and the mixing tool 58 to maintain the heated ingredients within the lower portion 126 of the mixing bowl 28 work togetherto maintain the useful life of the mixer assembly 10. Each feature described herein works in combination to achieve a safer and more efficient mixer assembly 10 to extend the useful life of the mixer assembly 10 as a whole.

## Claims

1. A mixer assembly (10), comprising:
a body (12) having a pedestal (14) and a mixer head (16);
a mixing bowl (28);
a shield (18) operably coupled to the mixer head (16),
**characterized in that**
the shield (18) comprises:
a stationary attachment portion (20);
a rotational inner ring (22) operably coupled to the stationary attachment portion (20); and
a gasket (24) coupled to the rotational inner ring (22), the rotational inner ring (22) disposed between the gasket (24) and the stationary attachment portion (20);
the mixer assembly (10) further comprising:
a heated base (26) operably coupled to the pedestal (14) and configured to receive the mixing bowl (28); and
a locking member (30) coupled to the heated base (26) and operable between a locked position (32) and an unlocked position (34),
wherein the mixing bowl (28) has a shell (66) and a ridge (72) extending outwardly from the shell (66),
wherein the heated base (26) includes engagement clips (160) selectively coupled to the ridge (72) of the mixing bowl (28), and wherein the locking member (30) securely couples the engagement clips (160) to the ridge (72) in the locked position (32),
wherein the heated base (26) includes an outer housing (130) and an inner housing (132) that defines apertures (144), and wherein the engagement clips (160) extend through the apertures (144) to selectively couple the mixing bowl (28) to the heated base (26),
wherein the locking member (30) is disposed between the inner housing (132) and the outer housing (130) and defines recessed surfaces (178) configured to receive the engagement clips (160) in the unlocked position (34).

2. The mixer assembly (10) of claim 1, wherein the mixer head (16) has a pivot end (42) coupled to the pedestal (14) and an attachment end (40) that has an attachment feature (46) , and wherein the shield (18) surrounds the attachment end (40).

3. The mixer assembly (10) of claim 2, wherein the attachment feature (46) is coupled to the gasket (24) of the shield (18) to define a seal (48) between the attachment feature (46) and the shield (18), and wherein the attachment feature (46) is operably coupled to the rotational inner ring (22) of the shield (18).

4. The mixer assembly (10) of any one of claims 2 and 3, further comprising:
a mixing tool (58) operably coupled to the attachment end (40) of the mixer head (16), the mixing tool (58) comprising:
a retention end (100) selectively coupled to the attachment end (40) of the mixer head (16);
a shaft (102) extending from the retention end (100) and having a terminal end (112);
a first arm (104) including a crossbar (114) and a flipping portion (116), the flipping portion (116) having a tip (118) that leads the crossbar (114) relative to the shaft (102); and
a second arm (106) extending outwardly from the terminal end (112) of the shaft (102).

5. The mixer assembly (10) of claim 4, wherein the first arm (104) extends outward and downward at a first angle (120) from the shaft (102) of the mixing tool (58), and wherein the second arm (106) extends outward and upward from the shaft (102) in an opposing second angle (122) relative to the first angle (120) of the first arm (104).

6. The mixer assembly (10) of either of claims 4 and 5, wherein the gasket (24) is coupled to the mixer head (16) proximate to the mixing tool (58), the gasket (24) coupled to the rotational inner ring (22) of the shield (18) to define a seal (48).

7. The mixer assembly (10) of any one of claims 2-6, wherein the shield (18) includes a drip guard (80) disposed adjacent the pivot end (42) of the mixer head (16) and the pedestal (14).

8. The mixer assembly (10) of claim 7, wherein the drip guard (80) extends between the mixer head (16) and the pedestal (14).

9. The mixer assembly (10) of any of previous claims, wherein the engagement clips (160) each define a projection (162) on a first side (164) and a channel (166) on an opposing second side (168), and wherein the locking member (30) is disposed within the channels (166) of the engagement clips (160).

10. The mixer assembly (10) of any one of claims 1-9, wherein the heated base (26) comprises:
a housing (130) having an upper rim (140) and a lower bowl (142); and
induction coils (137) disposed within the housing (130), wherein the induction coils (137) define a substantially even temperature pattern within the housing (130).

11. The mixer assembly (10) of any one of claims 1-9, wherein the heated base (26) comprises:
a housing (130) having an upper rim (140) and a lower bowl (142);
a heater (136) disposed within the lower bowl (142) of the housing (130); and
a thermal capacitor (134) coupled to the heater (136) and defining a substantially even temperature pattern within the housing (130).

## Patentansprüche

1. Mixer-Anordnung (10), aufweisend:
einen Körper (12) mit einem Sockel (14) und einem Mixerkopf (16);
eine Mixerschüssel (28);
eine Abschirmung (18), die mit dem Mixerkopf (16) wirkgekoppelt ist,
**dadurch gekennzeichnet, dass**
die Abschirmung (18) aufweist:
einen stationären Befestigungsabschnitt (20);
einen drehbaren Innenring (22), der mit dem stationären Befestigungsabschnitt (20) wirkgekoppelt ist; und
ein Dichtungselement (24), das mit dem drehbaren Innenring (22) gekoppelt ist, wobei der drehbare Innenring (22) zwischen dem Dichtungselement (24) und dem stationären Befestigungsabschnitt (20) angeordnet ist;
wobei die Mixer-Anordnung (10) ferner aufweist:
eine beheizte Basis (26), die mit dem Sockel (14) wirkgekoppelt ist und zur Aufnahme der Mixerschüssel (28) konfiguriert ist; und
ein Verriegelungselement (30), das mit der beheizten Basis (26) gekoppelt ist und zwischen einer verriegelten Position (32) und einer entriegelten Position (34) betätigbar ist,
wobei die Mixerschüssel (28) eine Schale (66) und einen Grat (72) aufweist, der sich von der Schale (66) nach außen erstreckt,
wobei die beheizte Basis (26) Eingriffsklammern (160) aufweist, die selektiv mit dem Grat (72) der Mixerschüssel (28) gekoppelt werden, und wobei das Verriegelungselement (30) in der verriegelten Position (32) die Eingriffsklammern (160) auf sichere Weise an den Grat (72) koppelt,
wobei die beheizte Basis (26) ein Außengehäuse (130) und ein Innengehäuse (132) aufweist, das Öffnungen (144) definiert, und wobei sich die Eingriffsklammern (160) durch die Öffnungen (144) erstrecken, um die Mixerschüssel (28) selektiv mit der beheizten Basis (26) zu koppeln,
wobei das Verriegelungselement (30) zwischen dem Innengehäuse (132) und dem Außengehäuse (130) angeordnet ist und vertiefte Flächen (178) definiert, die in der entriegelten Position (34) zur Aufnahme der Eingriffsklammern (160) konfiguriert sind.

2. Mixer-Anordnung (10) nach Anspruch 1, wobei der Mixerkopf (16) ein mit dem Sockel (14) gekoppeltes Schwenkende (42) und ein Befestigungsende (40) aufweist, das ein Befestigungsmerkmal (46) aufweist, und wobei die Abschirmung (18) das Befestigungsende (40) umgibt.

3. Mixer-Anordnung (10) nach Anspruch 2, wobei das Befestigungsmerkmal (46) mit dem Dichtungselement (24) der Abschirmung (18) gekoppelt ist, um eine Dichtung (48) zwischen dem Befestigungsmerkmal (46) und der Abschirmung (18) zu definieren, und wobei das Befestigungsmerkmal (46) mit dem drehbaren Innenring (22) der Abschirmung (18) wirkgekoppelt ist.

4. Mixer-Anordnung (10) nach einem der Ansprüche 2 und 3, ferner aufweisend:
ein Mixerwerkzeug (58), das mit dem Befestigungsende (40) des Mixerkopfs (16) wirkgekoppelt ist, wobei das Mixerwerkzeug (58) aufweist:
ein Halteende (100), das selektiv mit dem Befestigungsende (40) des Mixerkopfs (16) gekoppelt ist;
einen Schaft (102), der sich von dem Halteende (100) erstreckt und ein Anschlussende (112) aufweist;
einen ersten Arm (104) mit einer Querstange (114) und einem Kippabschnitt (116), wobei der Kippabschnitt (116) eine Spitze (118) aufweist, die die Querstange (114) relativ zu dem Schaft (102) führt; und
einen zweiten Arm (106), der sich von dem Anschlussende (112) des Schafts (102) nach außen erstreckt.

5. Mixer-Anordnung (10) nach Anspruch 4, wobei sich der erste Arm (104) in einem ersten Winkel (120) von dem Schaft (102) des Mixerwerkzeugs (58) nach außen und unten erstreckt, und wobei sich der zweite Arm (106) von dem Schaft (102) in einem entgegengesetzten zweiten Winkel (122) relativ zu dem ersten Winkel (120) des ersten Arms (104) nach außen und oben erstreckt.

6. Mixer-Anordnung (10) nach einem der Ansprüche 4 und 5, wobei das Dichtungselement (24) mit dem Mixerkopf (16) in der Nähe des Mixerwerkzeugs (58) gekoppelt ist, das Dichtungselement (24) mit dem drehbaren Innenring ( 22) der Abschirmung (18) gekoppelt ist, um eine Dichtung (48) zu definieren.

7. Mixer-Anordnung (10) nach einem der Ansprüche 2 bis 6, wobei die Abschirmung (18) einen Tropfschutz (80) aufweist, der neben dem Schwenkende (42) des Mixerkopfs (16) und dem Sockel (14) angeordnet ist.

8. Mixer-Anordnung (10) nach Anspruch 7, wobei sich der Tropfschutz (80) zwischen dem Mixerkopf (16) und dem Sockel (14) erstreckt.

9. Mixer-Anordnung (10) nach einem der vorstehenden Ansprüche, wobei die Eingriffsklammern (160) jeweils einen Vorsprung (162) auf einer ersten Seite (164) und einen Kanal (166) auf einer gegenüberliegenden zweiten Seite (168) definieren, und wobei das Verriegelungselement (30) innerhalb der Kanäle (166) der Eingriffsklammern (160) angeordnet ist.

10. Mixer-Anordnung (10) nach einem der Ansprüche 1 bis 9, wobei die beheizte Basis (26) aufweist:
ein Gehäuse (130) mit einem oberen Rand (140) und einer unteren Schüssel (142); und
Induktionsspulen (137), die innerhalb des Gehäuses (130) angeordnet sind, wobei die Induktionsspulen (137) ein im Wesentlichen gleichmäßiges Temperaturmuster innerhalb des Gehäuses (130) definieren.

11. Mixer-Anordnung (10) nach einem der Ansprüche 1 bis 9, wobei die beheizte Basis (26) aufweist:
ein Gehäuse (130) mit einem oberen Rand (140) und einer unteren Schüssel (142);
eine Heizeinrichtung (136), die in der unteren Schüssel (142) des Gehäuses (130) angeordnet ist; und
einen Thermokondensator (134), der mit der Heizeinrichtung (136) gekoppelt ist und ein im Wesentlichen gleichmäßiges Temperaturmuster innerhalb des Gehäuses (130) definiert.

## Revendications

1. Ensemble mixeur (10), comprenant :
un corps (12) ayant un socle (14) et une tête de mixeur (16) ;
un bol mélangeur (28) ;
une protection (18) fonctionnellement accouplée à la tête de mixeur (16),
**caractérisé en ce que** la protection (18) comprend :
une portion de fixation stationnaire (20) ;
une bague interne rotative (22) fonctionnellement accouplée à la portion de fixation stationnaire (20) ; et
un joint d'étanchéité statique (24) accouplé à la bague interne rotative (22), la bague interne rotative (22) disposée entre le joint d'étanchéité statique (24) et la portion de fixation stationnaire (20) ;
l'ensemble mixeur (10) comprenant en outre :
une base chauffée (26) fonctionnellement accouplée au socle (14) et conçue pour recevoir le bol mélangeur (28) ; et
un élément de verrouillage (30) accouplé à la base chauffée (26) et pouvant fonctionner entre une position verrouillée (32) et une position déverrouillée (34),
le bol mélangeur (28) ayant une coque (66) et une arête (72) s'étendant vers l'extérieur depuis la coque (66),
la base chauffée (26) comprenant des étriers d'engagement (160) sélectivement accouplés à l'arête (72) du bol mélangeur (28), et l'élément de verrouillage (30) accouplant de manière sécure les étriers d'engagement (160) à l'arête (72) dans la position verrouillée (32),
la base chauffée (26) comprenant un logement (130) externe et un logement interne (132) qui définit des ouvertures (144), et les étriers d'engagement (160) s'étendant à travers les ouvertures (144) pour accoupler sélectivement le bol mélangeur (28) à la base chauffée (26),
l'élément de verrouillage (30) étant disposé entre le logement interne (132) et le logement (130) externe et définissant des surfaces renfoncées (178) conçues pour recevoir les étriers d'engagement (160) dans la position déverrouillée (34).

2. Ensemble mixeur (10) selon la revendication 1, la tête de mixeur (16) ayant une extrémité pivot (42) accouplée au socle (14) et une extrémité de fixation (40) qui présente un élément de fixation (46), et la protection (18) entourant l'extrémité de fixation (40).

3. Ensemble mixeur (10) selon la revendication 2, l'élément de fixation (46) étant accouplé au joint d'étanchéité statique (24) de la protection (18) pour définir un joint (48) entre l'élément de fixation (46) et la protection (18), et l'élément de fixation (46) étant fonctionnellement accouplé à la bague interne rotative (22) de la protection (18).

4. Ensemble mixeur (10) selon l'une quelconque des revendications 2 et 3, comprenant en outre :
un outil de mélange (58) fonctionnellement accouplé à l'extrémité de fixation (40) de la tête de mixeur (16), l'outil de mélange (58) comprenant :
une extrémité de rétention (100) sélectivement accouplée à l'extrémité de fixation (40) de la tête de mixeur (16) ;
un arbre (102) s'étendant depuis l'extrémité de rétention (100) et ayant une extrémité terminale (112) ;
un premier bras (104) comprenant une barre transversale (114) et une portion basculante (116), la portion basculante (116) ayant une pointe (118) qui oriente la barre transversale (114) par rapport à l'arbre (102) ; et
un second bras (106) s'étendant vers l'extérieur depuis l'extrémité terminale (112) de l'arbre (102).

5. Ensemble mixeur (10) selon la revendication 4, le premier bras (104) s'étendant vers l'extérieur et vers le bas sous un premier angle (120) de l'arbre (102) de l'outil de mélange (58), et le second bras (106) s'étendant vers l'extérieur et vers le haut depuis l'arbre (102) dans un second angle opposé (122) par rapport au premier angle (120) du premier bras (104).

6. Ensemble mixeur (10) selon l'une ou l'autre des revendications 4 et 5, le joint d'étanchéité statique (24) étant accouplé à la tête de mixeur (16) près de l'outil de mélange (58), le joint d'étanchéité statique (24) accouplé à la bague interne rotative (22) de la protection (18) pour définir un joint (48).

7. Ensemble mixeur (10) selon l'une quelconque des revendications 2 à 6, la protection (18) comprenant une protection anti-goutte (80) disposée adjacente à l'extrémité pivot (42) de la tête de mixeur (16) et du socle (14).

8. Ensemble mixeur (10) selon la revendication 7, la protection anti-goutte (80) s'étendant entre la tête de mixeur (16) et le socle (14).

9. Ensemble mixeur (10) selon l'une quelconque des revendications précédentes, les étriers d'engagement (160) définissant chacun une projection (162) sur un premier côté (164) et un canal (166) sur un second côté opposé (168), et l'élément de verrouillage (30) étant disposé à l'intérieur des canaux (166) des étriers d'engagement (160).

10. Ensemble mixeur (10) selon l'une quelconque des revendications 1 à 9, la base chauffée (26) comprenant :
un logement (130) ayant un bord supérieur (140) et un bol inférieur (142) ; et
des bobines d'induction (137) disposées à l'intérieur du logement (130), les bobines d'induction (137) définissant un profil de température sensiblement uniforme à l'intérieur du logement (130).

11. Ensemble mixeur (10) selon l'une quelconque des revendications 1 à 9, la base chauffée (26) comprenant :
un logement (130) ayant un bord supérieur (140) et un bol inférieur (142) ;
un dispositif de chauffage (136) disposé à l'intérieur du bol inférieur (142) du logement (130) ; et
un condensateur thermique (134) accouplé au dispositif de chauffage (136) et définissant un profil de température sensiblement uniforme à l'intérieur du logement (130).
